# EUROPEAN PATENT APPLICATION

(11) **EP 2 998 910 A1**
(43) Date of publication of application: **23.03.2016**
(21) Application number: 15184914.8
(22) Date of filing: 11.09.2015
(51) Int. Cl.: G06Q 10/00

(54) **SYSTEM AND METHOD FOR RETRIEVING AND PROCESSING MAINTENANCE INFORMATION FOR A MULTIFUNCTION PERIPHERAL**

(30) Priority: 16.09.2014 JP 2014188281
(71) Applicant: Ricoh Company, Ltd., Tokyo 143-8555 (JP)
(72) Inventor: TOKUDA, Takaaki, Ohta-ku, Tokyo 143-8555 (JP); TSURUMI, Ryohta, Ohta-ku, Tokyo 143-8555 (JP)
(74) Representative: Leeming, John Gerard

(57) **Abstract**

An information processing device includes: a reception unit that receives, from an information terminal, a first page request including a request of first information for indicating a method of maintenance operation with respect to an object device; an information request unit that generates a first information request to request the first information included in the first page request; an information accumulation unit that accumulates information related to the object device; an extraction unit that extracts the first information from the information accumulation unit according to the first information request; a creation unit that creates second page information including first page information corresponding to the first page request and the first information extracted by the extraction unit; and a response unit that transmits the second page information, which is to display the first information on the information terminal, to the information terminal in response to the first page request.

## Description

The present invention relates to an information processing device and an information processing method.

Recently, an information terminal such as a smartphone or a tablet terminal is widely spread and performance thereof is improved. Thus, an information processing system with which it is possible to acquire information of a product, which is provided in a field, by using these information terminals without going to the field is come to be constructed. By using such an information terminal, a field engineer who performs repair and maintenance of the product arranged in the field can acquire information of the product provided in the field from the information processing system, whereby efficiency of the repair and the maintenance is improved (see Japanese Patent No. 3831143).

However, in the system described in Japanese Patent No. 3831143, there has been a problem that it is not possible to specify a component and software to be objects of maintenance in a product and to present a detailed method of maintenance operation. Thus, it becomes difficult to reduce a cost of the maintenance operation and to reduce operation time.

The present invention has been provided in view of the forgoing and is to provide an information processing system and an information processing device which can specify an object of maintenance and can present a detailed method of the maintenance operation.

It is an object of the present invention to at least partially solve the problems in the conventional technology.

An information processing device includes: a reception unit that receives, from an information terminal, a first page request including a request of first information for indicating a method of maintenance operation with respect to an object device; an information request unit that generates a first information request to request the first information included in the first page request received in the reception unit; an information accumulation unit that accumulates information related to the object device; an extraction unit that extracts the first information from the information accumulation unit according to the first information request; a creation unit that creates second page information including first page information corresponding to the first page request and the first information extracted by the extraction unit; and a response unit that transmits the second page information, which is to display the first information on the information terminal, to the information terminal in response to the first page request.

An information processing method includes: receiving, from an information terminal, a first page request including a request of first information for indicating a method of maintenance operation with respect to an object device; generating a first information request to request the first information included in the first page request received at the receiving; accumulating information related to the object device; extracting the first information from the information accumulated at the accumulating, according to the first information request; creating second page information including first page information corresponding to the first page request and the first information extracted at the extracting; and transmitting the second page information, which is to display the first information on the information terminal, to the information terminal in response to the first page request.

The above and other objects, features, advantages and technical and industrial significance of this invention will be better understood by reading the following detailed description of presently preferred embodiments of the invention, when considered in connection with the accompanying drawings.
FIG. 1 is a whole configuration view of a system according to an embodiment;
FIG. 2 is a view illustrating an example of a hardware configuration of a server device according to the embodiment;
FIG. 3 is a view illustrating an example of a block configuration of a web server and a database server according to the embodiment;
FIG. 4 is a view illustrating an example of transition of a screen displayed on an information terminal;
FIG. 5 is a view illustrating an example of a login screen;
FIG. 6 is a view illustrating an example of a menu screen;
FIG. 7 is a view illustrating an example of a basic information screen;
FIG. 8 is a view illustrating an example of a component consumption period screen;
FIG. 9 is a view illustrating an example of a service call history screen;
FIG. 10 is a view illustrating an example of a firmware screen;
FIG. 11 is a view illustrating an example of a recommended operation list screen;
FIG. 12 is a view illustrating an example of a toner replacement reminder screen;
FIG. 13 is a view illustrating an example of displaying a manual of toner replacement;
FIG. 14 is a view illustrating an example of displaying a moving image of toner replacement;
FIG. 15 is a view illustrating an example of displaying a dialogue of a video chat for toner replacement;
FIG. 16 is a view illustrating an example of a firmware update reminder screen;
FIG. 17 is a view illustrating an example of displaying release notes of firmware; and
FIG. 18 is a view illustrating an example of displaying a moving image for firmware update.

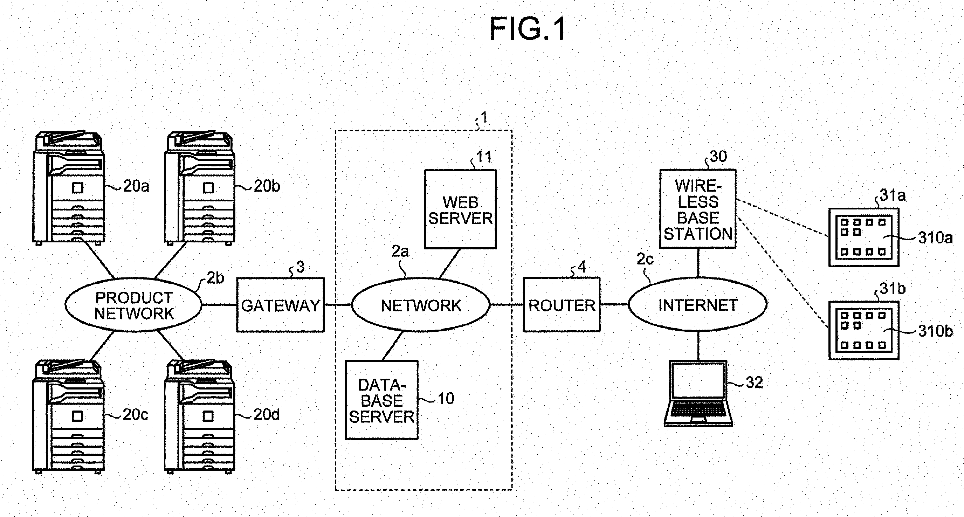

In the following, with reference to FIG. 1 to FIG. 18, an embodiment of an information processing device and an information processing method according to the present invention will be described in detail. Also, the present invention is not limited to the following embodiment and a configuration element in the following embodiment includes what can be easily realized by those skilled in the art, what is substantially identical, and what is in a so-called equivalent range. Also, a configuration element can be omitted, replaced, changed, and combined in various manners within the spirit and the scope of the following embodiment.

### (Configuration of whole system in present embodiment)

FIG. 1 is a whole configuration view of a system according to an embodiment. With reference to FIG. 1, a whole configuration of the system in the present embodiment will be described.

As illustrated in FIG. 1, the system in the present embodiment has a network configuration including a network 2a, a product network 2b, and the Internet 2c. The network 2a and the product network 2b are connected to each other through a gateway 3. The network 2a and the Internet 2c are connected to each other through a router 4.

The gateway 3 is a device to perform conversion of a communication protocol between a plurality of networks. More specifically, the gateway 3 performs conversion of protocols such as a high-level data link control (HDLC) and a point-to-point protocol (PPP), which are protocols with respect to a special line of the network 2a including a wide area network (WAN) or the like, with a protocol such as a transmission control protocol (TCP)/Internet protocol (IP) of the product network 2b and realizes data communication between the network 2a and the product network 2b. Note that a communication protocol of each of the network 2a and the product network 2b is not limited to what has been described above. A communication protocol corresponding to a network form may be arbitrarily applied.

Similarly to the gateway 3, the router 4 is a device to convert communication protocols between a plurality of networks or to connect the plurality of networks. More specifically, conversion between a protocol of the network 2a and a protocol of TCP/IP of the Internet 2c is performed and data communication between the network 2a and the Internet 2c is realized.

As illustrated in FIG. 1, a database server 10 and a web server 11 are connected to the gateway 3 and the router 4 through the network 2a and are included in an information processing system 1.

The database server 10 is a server device to acquire and accumulate, through the gateway 3, device information such as product information of MFPs 20a to 20d, information of a history of a service call, information of a period of use of a component, and information of firmware. A detail of an operation of the database server 10 will be described later.

The web server 11 is a hypertext transfer protocol (HTTP) server to create a page, which is a combination of page information stored by itself and device information accumulated in the database server 10, through the router 4 in response to a page request received, for example, from information terminals 31a and 31b described later and to provide the created page as a page response to the information terminals 31a and 31b. A detail of an operation of the web server 11 will be described later.

Note that in the system illustrated in FIG. 1, the database server 10 and the web server 11 in the information processing system 1 are configured as separate server devices. However, this is not the limitation. For example, one server device (information processing device) having functions of the database server 10 and the web server 11 may be included. Also, the functions of the database server 10 and the web server 11 may be realized by three or more server devices.

As illustrated in FIG. 1, each of multifunction peripherals (MFP) 20a to 20d which are image forming devices is connected to the gateway 3 through the product network 2b. Each of the MFPs 20a to 20d is a multifunction peripheral including at least two of a copier function, a printer function, a scanner function, and a fax function. Note that in a case of referring to the MFPs 20a to 20d without distinction or referring to the MFPs 20a to 20d generally, the MFPs 20a to 20d will be simply referred to as an "MFP 20." Also, in FIG. 1, four MFPs 20 are illustrated but the number thereof is not limited. Also, the MFP 20 is not limited to a multifunction peripheral and may be an image forming device such as a copier, a printer, a fax device, or a scanner device or an image projection device.

As illustrated in FIG. 1, the wireless base station 30 and a personal computer (PC) 32 are connected to the router 4 through the Internet 2c. Also, each of the information terminals 31a and 31b can communicate with the wireless base station 30 by wireless communication and can perform data communication with the router 4.

The wireless base station 30 is a base station which performs wireless communication with the information terminals 31a and 31b and makes the information terminals 31a and 31b capable of communicating with the Internet 2c.

Each of the information terminals 31a and 31b is a portable information terminal, such as a smartphone or a tablet terminal, which is connected to the Internet 2c through the wireless base station 30 and which performs data communication with the web server 11 of the information processing system 1. The information terminals 31a and 31b respectively include touch panels 310a and 310b each of which functions as an input device and a display device. Here, for example, wireless communication is realized based on a communication standard such as wireless fidelity (Wi-Fi (registered trademark)). Each of the information terminals 31a and 31b transmits a request of information, which is necessary for the MFP 20, to the information processing system 1 and displays, on a browser, a page including the received information related to the MFP 20. Note that in a case of referring to the information terminals 31 a and 31 b without distinction or referring to the information terminals 31 a and 31b generally, the information terminals 31 a and 31b will be simply referred to as an "information terminal 31." Also, in FIG. 1, two information terminals 31 are illustrated but the number thereof is not limited.

The PC 32 is, for example, a desktop PC or a laptop PC which is connected to the Internet 2c and which performs data communication with the web server 11 of the information processing system 1.

Note that as illustrated in FIG. 1, the product network 2b and the Internet 2c are not necessarily separate networks. For example, the product network 2b may be included in the Internet 2c.

Also, a device which transmits a request of information, which is necessary for the MFP 20, to the information processing system 1 and which displays, on a browser, a page including the received information related to the MFP 20 is not limited to the information terminal 31 and may be an information terminal such as the PC 32.

### (Hardware configuration of server device)

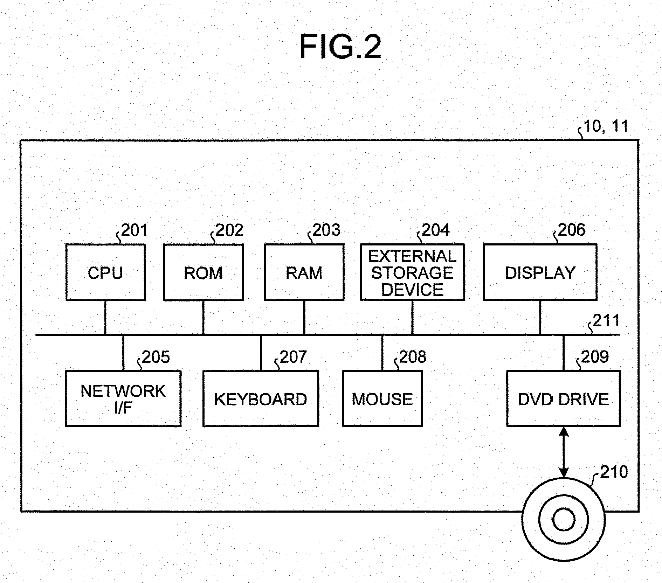

FIG. 2 is a view illustrating an example of a hardware configuration of a server device according to the embodiment. With reference to FIG. 2, a hardware configuration of each of the database server 10 and the web server 11 will be described. Here, in order to simplify a description, a hardware configuration of the database server 10 will be described but a hardware configuration of the web server 11 is in a similar manner.

As illustrated in FIG. 2, the database server 10 includes a central processing unit (CPU) 201, a read only memory (ROM) 202, a random access memory (RAM) 203, an external storage device 204, a network I/F 205, a display 206, a keyboard 207, a mouse 208, and a digital versatile disk (DVD) drive 209.

The CPU 201 is a device to control an operation of the whole database server 10. The ROM 202 is a non-volatile storage device storing a program for the database server 10. The RAM 203 is a volatile storage device used as a work area of the CPU 201.

The external storage device 204 is a storage device such as a hard disk drive (HDD) or a solid state drive (SSD) to store various kinds of data such as device information of the MFP 20 described later. The network I/F 205 is an interface for connection and data communication with the network 2a.

The display 206 is a display device to display a cursor, a menu, a window, and various kinds of information such as a character or an image. The keyboard 207 is an input device, for example, to select a character, a number, and various instructions and to move a cursor. The mouse 208 is an input device to perform selection and execution of the various instructions, selection of an object to be processed, movement of a cursor, and the like.

The DVD drive 209 is a device to read, write, and delete data with respect to a DVD 210 which is an example of an attachable/detachable storage medium.

The above-described CPU 201, ROM 202, RAM 203, external storage device 204, network I/F 205, display 206, keyboard 207, mouse 208, and DVD drive 209 are connected to each other in a communicable manner through a bus 211 such as an address bus or a data bus.

### (Block configuration of database server and web server)

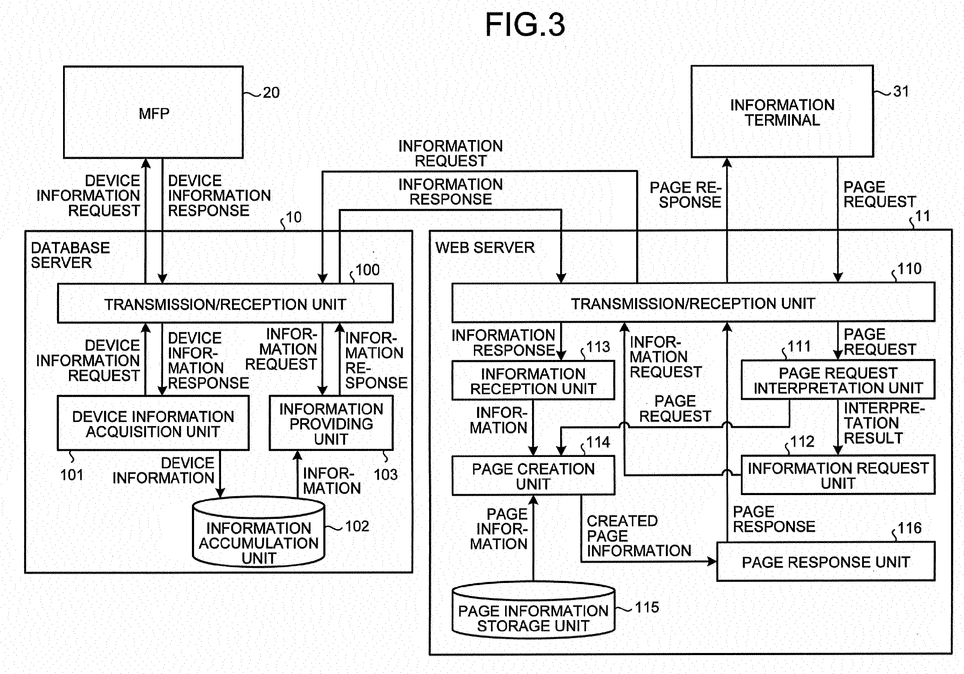

FIG. 3 is a view illustrating an example of a block configuration of a web server and a database server according to the embodiment. With reference to FIG. 3, a block configuration of each of the database server 10 and the web server 11 will be described.

As illustrated in FIG. 3, the database server 10 includes a transmission/reception unit 100, a device information acquisition unit 101 (acquisition unit), an information accumulation unit 102 (information accumulation unit), and an information providing unit 103 (extraction unit).

The transmission/reception unit 100 is a function unit which performs data communication with the MFP 20 through the network 2a, the gateway 3, and the product network 2b and which performs data communication with the web server 11 through the network 2a. The transmission/reception unit 100 is realized by the network I/F 205 illustrated in FIG. 2. Note that in FIG. 3, illustration of the network 2a, the gateway 3, and the product network 2b which are illustrated in FIG. 1 is omitted in the description.

The device information acquisition unit 101 is a function unit which periodically (such as once a day) transmits a device information request to request device information to the MFP 20 through the transmission/reception unit 100, receives a device information response including the device information from the MFP 20 in response, and acquires the device information. The device information acquisition unit 101 stores and accumulates, into the information accumulation unit 102, the device information included in the received device information response. Here, as described above, the device information is, for example, basic information (such as customer information or product information) of the MFP 20, information of a history of a service call, information of a period of use of a component, and information of firmware. The device information acquisition unit 101 is realized by a program executed by the CPU 201 illustrated in FIG. 2. Note that it is assumed that the device information acquisition unit 101 periodically transmits a device information request to the MFP 20 and acquires device information. However, this is not the limitation. For example, the MFP 20 may periodically transmit device information to the device information acquisition unit 101. Also, customer information among the device information may not be what is accumulated in the MFP 20 and may be what is accumulated in a different system. The device information acquisition unit 101 may acquire the customer information from the different system.

The information accumulation unit 102 is a storage unit which stores and accumulates the device information acquired by the device information acquisition unit 101. The information accumulation unit 102 is realized by the external storage device 204 illustrated in FIG. 2.

The information providing unit 103 is a function unit which receives the information request, which is transmitted from the web server 11, through the transmission/reception unit 100 and extracts, from the information accumulation unit 102, information related to the MFP 20, which is indicated by the information request. The information providing unit 103 transmits an information response including the information related to the MFP 20, which is extracted from the information accumulation unit 102, to the web server 11 through the transmission/reception unit 100. The information providing unit 103 is realized by a program executed by the CPU 201 illustrated in FIG. 2.

As illustrated in FIG. 3, the web server 11 includes a transmission/reception unit 110, a page request interpretation unit 111 (reception unit), an information request unit 112 (information request unit), an information reception unit 113, a page creation unit 114 (creation unit), a page information storage unit 115, and a page response unit 116 (response unit).

The transmission/reception unit 110 is a function unit which performs data communication with the information terminal 31 through the network 2a, the router 4, the Internet 2c, and the wireless base station 30 and performs data communication with the database server 10 through the network 2a. The transmission/reception unit 110 is realized by the network I/F 205 illustrated in FIG. 2. Note that in FIG. 3, illustration of the network 2a, the router 4, the Internet 2c, and the wireless base station 30 which are illustrated in FIG. 1 is omitted in the description.

The page request interpretation unit 111 is a function unit which receives the page request, which is transmitted from the information terminal 31, through the transmission/reception unit 110 and interprets what kind of information among the information related to the MFP 20 is requested by the page request. The page request interpretation unit 111 transmits, to the information request unit 112, a result of interpretation indicating what kind of information among the information related to the MFP 20 is requested by the page request. Also, the page request interpretation unit 111 transmits the received page request to the page creation unit 114. The page request interpretation unit 111 is realized by a program executed by the CPU 201 illustrated in FIG. 2.

The information request unit 112 is a function unit which transmits an information request to request the information related to the MFP 20, which is indicated by the interpretation result received from the page request interpretation unit 111, to the database server 10 through the transmission/reception unit 110. The information request unit 112 is realized by a program executed by the CPU 201 illustrated in FIG. 2.

The information reception unit 113 is a function unit which receives an information response which is a response to the information request, which is transmitted by the information request unit 112, from the database server 10 through the transmission/reception unit 110. The information reception unit 113 transmits, to the page creation unit 114, the information related to the MFP 20, which is included in the received information response. The information reception unit 113 is realized by a program executed by the CPU 201 illustrated in FIG. 2.

The page creation unit 114 is a function unit which extracts page information corresponding to the page request, which is received from the page request interpretation unit 111, from the page information storage unit 115 and creates new page information from the extracted page information and the information related to the MFP 20, which is received from the information reception unit 113. The page creation unit 114 transmits the created page information (hereinafter, referred to as created page information) to a page response unit 116. The page creation unit 114 is realized by a program executed by the CPU 201 illustrated in FIG. 2.

The page information storage unit 115 is a storage unit which stores page information corresponding to the page request transmitted from the information terminal 31. The page information storage unit 115 is realized by the external storage device 204 illustrated in FIG. 2.

The page response unit 116 is a function unit which transmits a page response including the created page information, which is received from the page creation unit 114, as a response to the page request, which is transmitted from the information terminal 31, to the information terminal 31 through the transmission/reception unit 110. The information terminal 31 displays a page on a browser based on the created page information included in the received page response. The page response unit 116 is realized by a program executed by the CPU 201 illustrated in FIG. 2.

Note that a part or all of the device information acquisition unit 101, the information providing unit 103, the page request interpretation unit 111, the information request unit 112, the information reception unit 113, the page creation unit 114, and the page response unit 116 which are illustrated in FIG. 3 may not be realized by a program which is software and may be realized by a hardware circuit such as an application specific integrated circuit (ASIC) or a field-programmable gate array (FPGA).

Also, the transmission/reception unit 100, the device information acquisition unit 101, the information accumulation unit 102, the information providing unit 103, the transmission/reception unit 110, the page request interpretation unit 111, the information request unit 112, the information reception unit 113, the page creation unit 114, the page information storage unit 115, and the page response unit 116 are schematically indicating functions and these configurations are not the limitation.

### (Transition of screen displayed on information terminal)

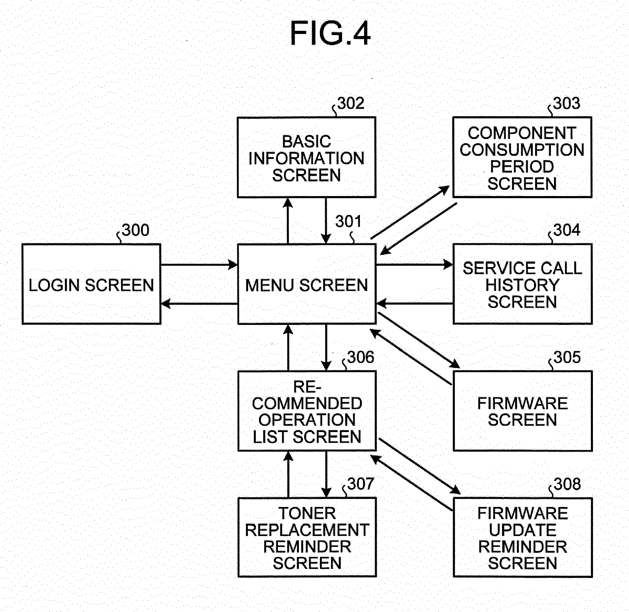

FIG. 4 is a view illustrating an example of transition of a screen displayed on an information terminal. With reference to FIG. 4, transition of a screen displayed on the information terminal 31 will be described.

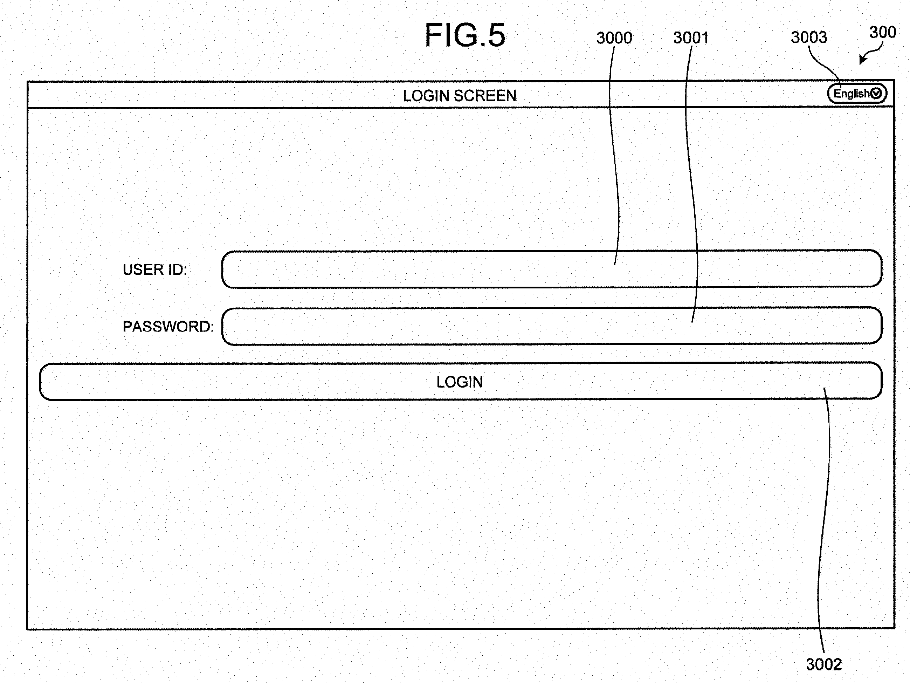

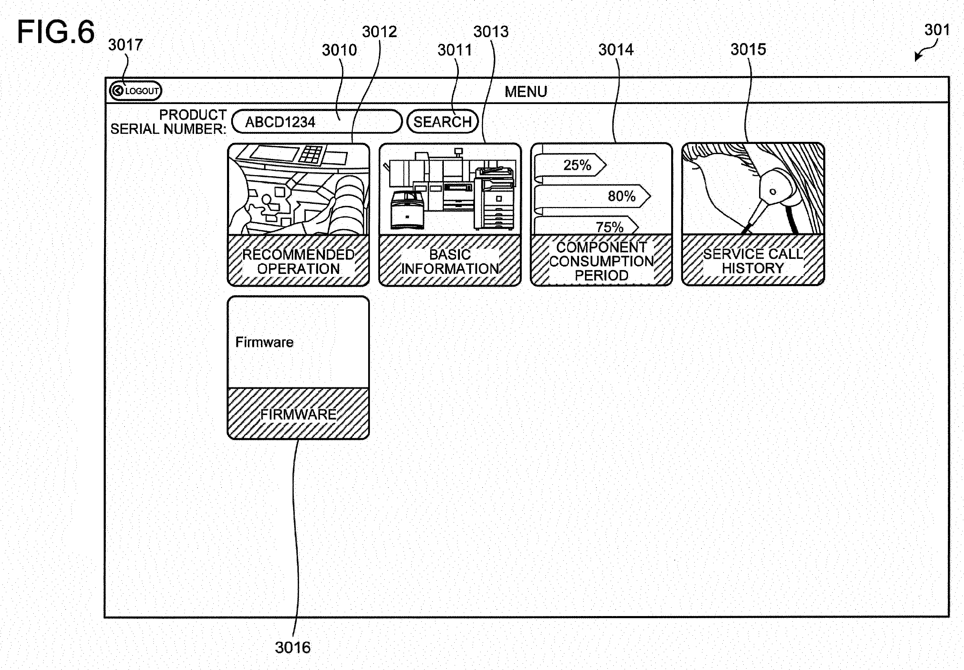

As illustrated in FIG. 4, in a case of using the information processing system 1 from the information terminal 31, a user (such as field engineer to perform maintenance operation of MFP 20 provided in place of customer) displays, on the information terminal 31, a login screen 300 to log into the information processing system 1. When the user uses the information terminal 31 and logs into the information processing system 1, a screen displayed on the information terminal 31 transitions to a menu screen 301. Details of the login screen 300 and the menu screen 301 will be respectively described later with reference to FIG. 5 and FIG. 6.

On the menu screen 301 displayed on the information terminal 31, the user inputs a serial number of the MFP 20 information, such as device information, of which is to be browsed (hereinafter referred to as object MFP) (object device). Then, the user can perform transition from the menu screen 301 displayed on the information terminal 31 into a basic information screen 302, a component consumption period screen 303, a service call history screen 304, a firmware screen 305, and a recommended operation list screen 306. Also, the user can perform transition from each of the basic information screen 302, the component consumption period screen 303, the service call history screen 304, the firmware screen 305, and the recommended operation list screen 306 which are displayed on the information terminal 31 into the menu screen 301.

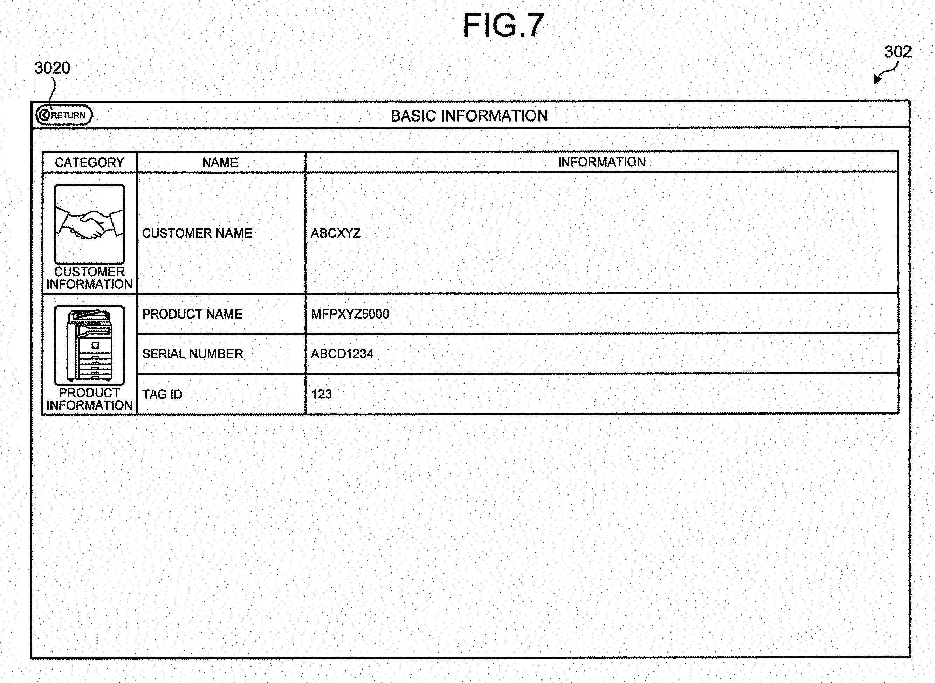

The basic information screen 302 is a screen to display basic information such as customer information or product information of the object MFP. A detail of the basic information screen 302 will be described later with reference to FIG. 7.

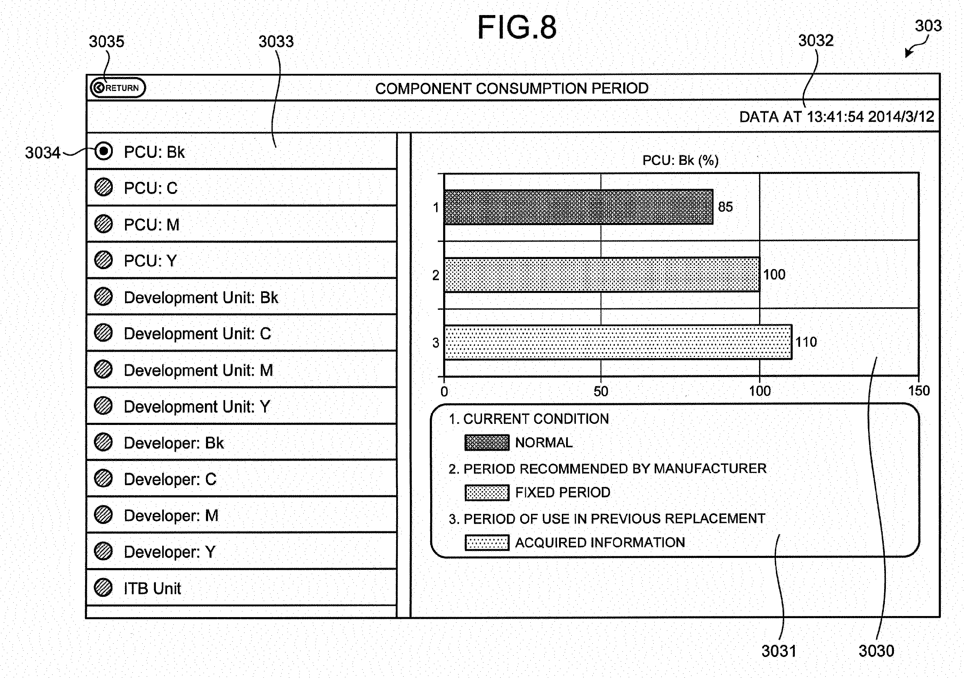

The component consumption period screen 303 is a screen to display a current period of use, a period recommended by a manufacturer, and a period of use of previous replacement, and the like of each consumable component included in the object MFP. A detail of the component consumption period screen 303 will be described later with reference to FIG. 8.

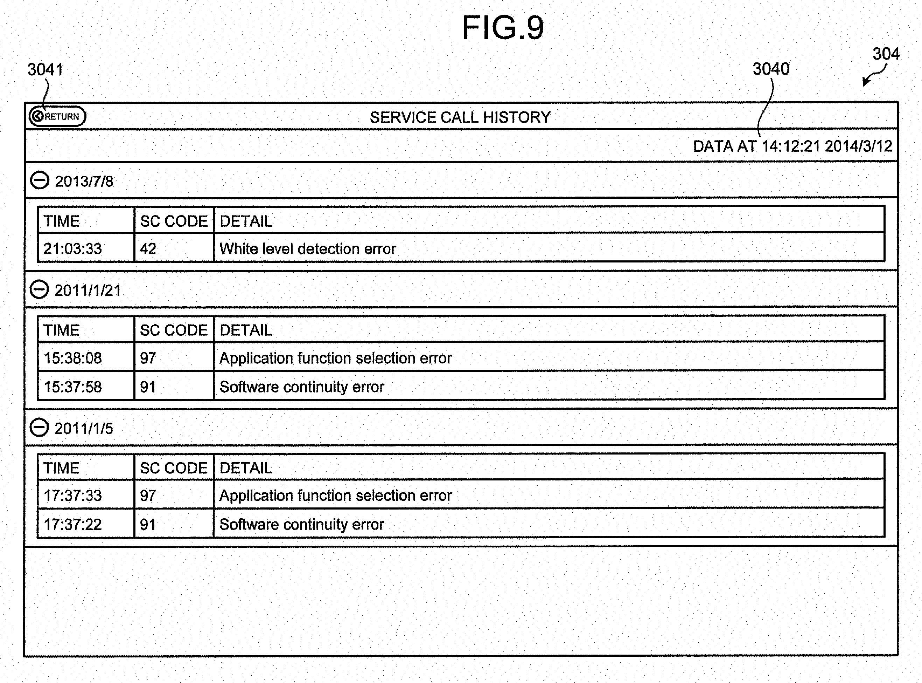

The service call history screen 304 is a screen to display a history of an error previously generated in the object MFP. A detail of the service call history screen 304 will be described later with reference to FIG. 9.

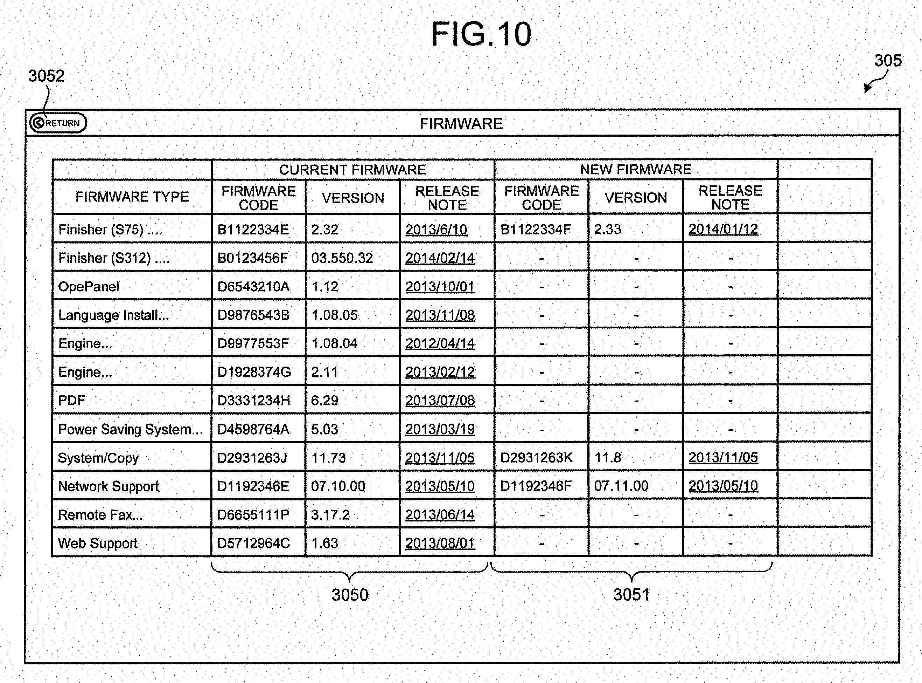

The firmware screen 305 is a screen to display a list of firmware information installed in each unit included in the object MFP. A detail of the firmware screen 305 will be described later with reference to FIG. 10.

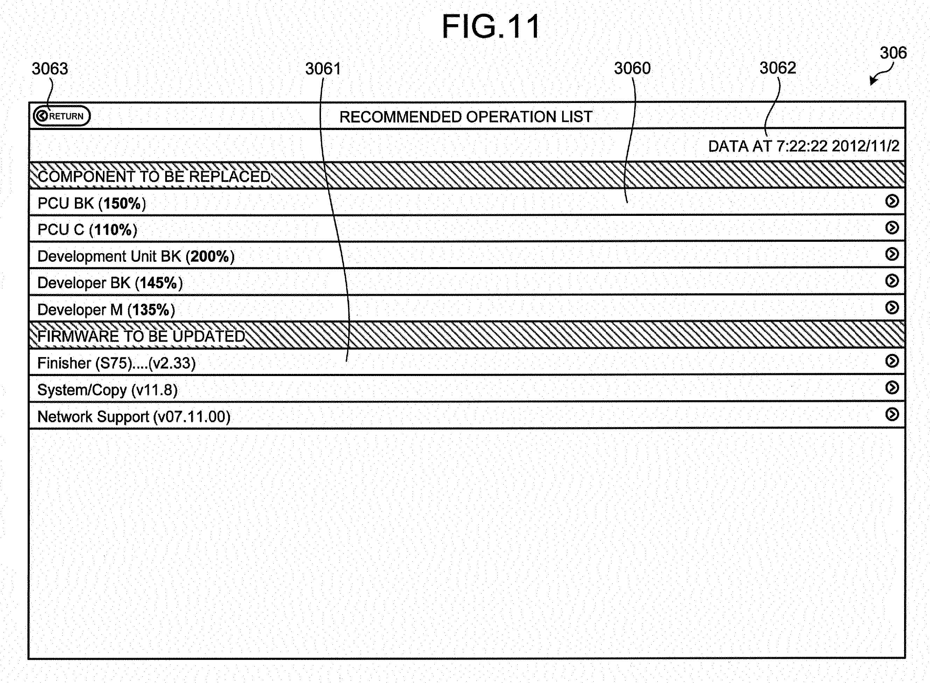

The recommended operation list screen 306 is a screen which displays a list of maintenance operation (such as toner replacement and firmware update) which is currently recommended in the object MFP. Also, when there is no currently-recommended maintenance operation in the object MFP, transition from the menu screen 301 to the recommended operation list screen 306 cannot be performed. Note that transition from the menu screen 301 to the recommended operation list screen 306 may be performed even when there is no recommended maintenance operation. However, in this case, it is indicated on the recommended operation list screen 306 that there is no recommended maintenance operation. A detail of the recommended operation list screen 306 will be described later in FIG. 11.

When there is toner replacement operation as maintenance operation recommended in the object MFP, the user can perform transition from the recommended operation list screen 306 displayed on the information terminal 31 to the toner replacement reminder screen 307. Also, when there is firmware update operation as maintenance operation recommended in the object MFP, the user can perform transition from the recommended operation list screen 306 displayed on the information terminal 31 into the firmware update reminder screen 308. Note that the above-described toner replacement operation indicates operation of replacing a toner unit.

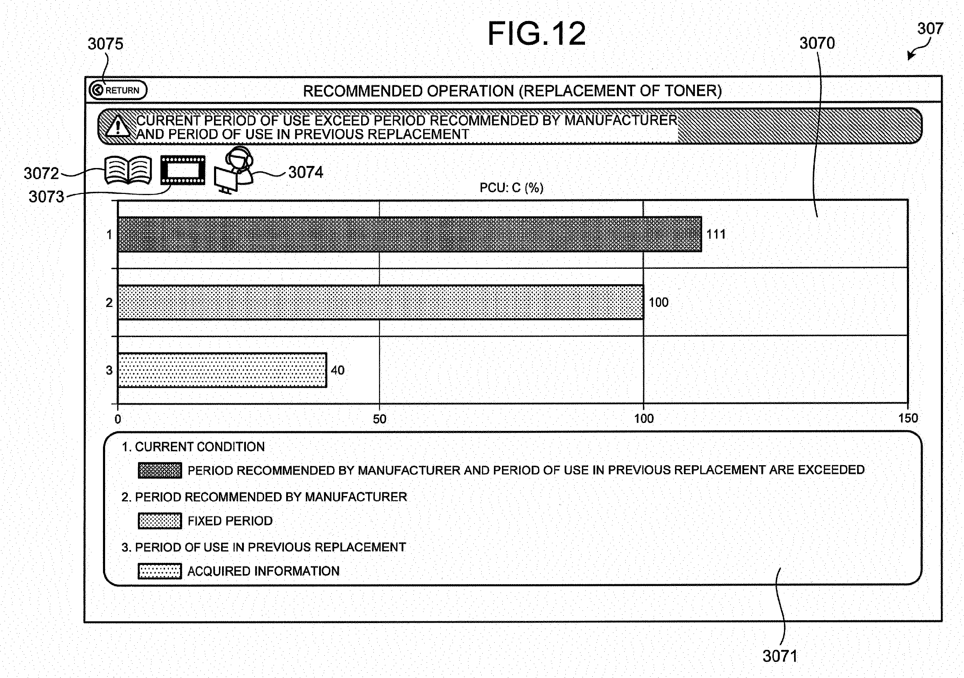

The toner replacement reminder screen 307 is a screen which displays a current period of use, a period recommended by a manufacturer, a period of use in previous component replacement, and the like of a toner to be replaced in the object MFP and which indicates a procedure of the toner replacement operation. A detail of the toner replacement reminder screen 307 will be described with reference to FIG. 12 to FIG. 15.

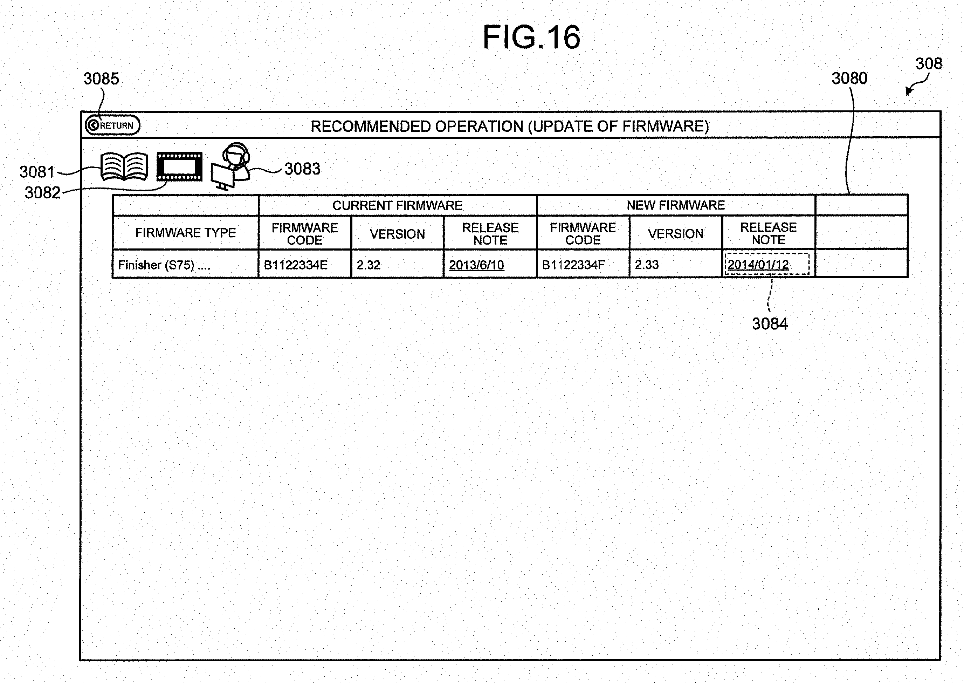

The firmware update reminder screen 308 is a screen which displays a firmware code, a version, release notes, and the like of firmware to be updated in the object MFP and which indicates a procedure of the firmware update operation. A detail of the firmware update reminder screen 308 will be described later with reference to FIG. 16 to FIG. 18.

### (Screen displayed with respect to object MFP and operation thereof)

### <Login screen>

FIG. 5 is a view illustrating an example of a login screen. With reference to FIG. 5, a detail of the login screen 300 will be described.

As illustrated in FIG. 5, the login screen 300 displayed on the information terminal 31 includes a user ID input unit 3000, a password input unit 3001, a login button 3002, and a display switch button 3003.

When logging into the information processing system 1 from the information terminal 31, the user inputs a user ID into the user ID input unit 3000, inputs a password into the password input unit 3001, and presses the login button 3002 in the login screen 300. Accordingly, a login request including the user ID and the password is transmitted from the information terminal 31 to the web server 11. The web server 11 checks matching of the received user ID and password with user information stored in the external storage device 204 illustrated in FIG. 2. When matching is checked, what indicates that login authentication is permitted is transmitted to the information terminal 31. Accordingly, the information terminal 31 can log into the information processing system 1.

Also, on the login screen 300, the user can switch a notation character (such as Japanese and English) on a display screen by pressing the display switch button 3003. In FIG. 5 to FIG. 18, a case where a screen is displayed in English on the information terminal 31 is illustrated.

### <Menu screen>

FIG. 6 is a view illustrating an example of a menu screen. With reference to FIG. 6, a detail of the menu screen 301 will be described.

When a login authentication is permitted on the login screen 300, the information terminal 31 transmits, to the web server 11, a page request to request page information of the menu screen 301 illustrated in FIG. 6. The page request interpretation unit 111 receives the page request, which is transmitted from the information terminal 31, through the transmission/reception unit 110 and interprets what kind of information among the information related to the MFP 20 is requested by the page request. However, since the object MFP is not yet specified at this time point, the page request interpretation unit 111 does not transmit, to the information request unit 112, a result of interpretation indicating what kind of information among the information related to the MFP 20 is requested by the page request. Also, the page request interpretation unit 111 transmits the received page request to the page creation unit 114.

The page creation unit 114 extracts, from the page information storage unit 115, page information corresponding to the page request received from the page request interpretation unit 111. Then, the page creation unit 114 creates page information related to the menu screen 301 and transmits the created page information to the page response unit 116. As a response to the page request transmitted from the information terminal 31, the page response unit 116 transmits a page response including the page information, which is received from the page creation unit 114, to the information terminal 31 through the transmission/reception unit 110. The information terminal 31 displays the menu screen 301 on a browser based on the page information included in the received page response.

As illustrated in FIG. 6, the menu screen 301 displayed on the information terminal 31 includes a serial number input unit 3010, a search button 3011, a recommended operation button 3012, a basic information button 3013, a component consumption period button 3014, a service call history button 3015, a firmware button 3016, and a logout button 3017.

On the menu screen 301, the user inputs a serial number of the object MFP into the serial number input unit 3010 and presses the search button 3011. In FIG. 6, an example in which "ABCD1234" is input into the serial number input unit 3010 is illustrated. Accordingly, the information terminal 31 transmits, to the web server 11, a page request which requests information indicating whether there is recommended maintenance operation with respect to the object MFP specified by the serial number input into the serial number input unit 3010. The page request interpretation unit 111 receives, through the transmission/reception unit 110, the page request transmitted from the information terminal 31 and interprets that information indicating whether there is maintenance operation recommended to the object MFP is requested as the information related to the MFP 20 by the page request. Then, the page request interpretation unit 111 transmits an interpretation result to the information request unit 112. The information request unit 112 transmits an information request, which requests information indicated by the interpretation result received from the page request interpretation unit 111, to the database server 10 through the transmission/reception unit 110.

The information providing unit 103 receives an information request, which is transmitted from the web server 11, through the transmission/reception unit 100 and extracts, from the information accumulation unit 102, information indicating whether there is maintenance operation recommended to the object MFP, which is indicated by the information request. The information providing unit 103 transmits an information response including the information, which is extracted from the information accumulation unit 102, to the web server 11 through the transmission/reception unit 100.

The information reception unit 113 receives an information response, which is a response to the information request transmitted from the information request unit 112, from the database server 10 through the transmission/reception unit 110 and transmits information included in the received information response to the page creation unit 114. The page creation unit 114 creates new page information based on the page information related to the menu screen 301 and the information indicating whether there is maintenance operation recommended to the object MFP, which is received from the information reception unit 113. Then, the page creation unit 114 transmits the created page information to the page response unit 116. As a response to the page request transmitted from the information terminal 31, the page response unit 116 transmits a page response including the created page information, which is received from the page creation unit 114, to the information terminal 31 through the transmission/reception unit 110.

When there is information indicating that there is maintenance operation recommended to the object MFP among the created page information included in the received page response, the information terminal 31 performs a blink display of the recommended operation button 3012. On the other hand, when there is information indicating that there is no maintenance operation recommended to the object MFP, the information terminal 31 does not display the recommended operation button 3012 or grays out the recommended operation button 3012 in such a manner that the button cannot be pressed. In such a manner, the user can easily check whether there is maintenance operation recommended to the object MFP by checking a display state of the recommended operation button 3012 on the menu screen 301.

Also, by pressing the recommended operation button 3012, the basic information button 3013, the component consumption period button 3014, the service call history button 3015 or the firmware button 3016 on the menu screen 301, the user can perform transition of a screen displayed on the information terminal 31 into the recommended operation list screen 306, the basic information screen 302, the component consumption period screen 303, the service call history screen 304, or the firmware screen 305. Transition operation into each screen will be described later.

Also, when the logout button 3017 is pressed on the menu screen 301, the information terminal 31 logs out from the information processing system 1 and a display screen transitions into the login screen 300.

### Basic information screen

FIG. 7 is a view illustrating an example of the basic information screen. With reference to FIG. 7, a detail of the basic information screen 302 will be described.

When the basic information button 3013 is pressed on the menu screen 301, the information terminal 31 transmits, to the web server 11, a page request to request basic information of the object MFP and to request a display of the basic information screen 302. The page request interpretation unit 111 receives the page request, which is transmitted from the information terminal 31, through the transmission/reception unit 110. Then, the page request interpretation unit 111 interprets that basic information of the object MFP is requested as the information related to the MFP 20 by the page request and transmits the interpretation result to the information request unit 112. Also, the page request interpretation unit 111 transmits the received page request to the page creation unit 114. The information request unit 112 transmits an information request, which requests basic information indicated by the interpretation result received from the page request interpretation unit 111, to the database server 10 through the transmission/reception unit 110.

The information providing unit 103 receives the information request, which is transmitted from the web server 11, through the transmission/reception unit 100 and extracts, from the information accumulation unit 102, the basic information of the object MFP, which is indicated by the information request. The information providing unit 103 transmits an information response including the basic information of the object MFP, which is extracted from the information accumulation unit 102, to the web server 11 through the transmission/reception unit 100.

The information reception unit 113 receives an information response, which is a response to the information request transmitted from the information request unit 112, from the database server 10 through the transmission/reception unit 110 and transmits, to the page creation unit 114, the basic information of the object MFP, which is included in the received information response. The page creation unit 114 extracts, from the page information storage unit 115, page information related to the basic information screen 302, which corresponds to the page request received from the page request interpretation unit 111. Then, the page creation unit 114 creates new page information based on the extracted page information and the basic information of the object MFP, which is received from the information reception unit 113. The page creation unit 114 transmits the created page information to the page response unit 116. As a response to the page request transmitted from the information terminal 31, the page response unit 116 transmits a page response including the created page information, which is received from the page creation unit 114, to the information terminal 31 through the transmission/reception unit 110.

The information terminal 31 displays the basic information screen 302, which displays the basic information of the object MFP on a browser, based on the created page information included in the received page response.

As illustrated in FIG. 7, the basic information screen 302 displayed on the information terminal 31 includes a return button 3020 and displays the basic information of the object MFP. For example, the basic information screen 302 displays, as basic information to be displayed, customer information and product information of the object MFP. In FIG. 7, an example in which a customer name "ABCXYZ" is displayed as customer information, a product name "MFPXYZ5000," a serial number "ABCD1234," and a tag ID "123" are displayed as product information is illustrated.

When the user presses the return button 3020 on the basic information screen 302, the information terminal 31 makes the display screen transition into the menu screen 301.

### omponent consumption period screen

FIG. 8 is a view illustrating an example of the component consumption period screen. With reference to FIG. 8, a detail of the component consumption period screen 303 will be described.

When the user presses the component consumption period button 3014 on the menu screen 301, the information terminal 31 transmits, to the web server 11, a page request which requests information of a kind of a consumable component of the object MFP, a current period of use of each consumable component, a period recommended by a manufacturer, and a period of use in previous component replacement and which requests a display of the component consumption period screen 303. An operation in which the information terminal 31 transmits a page request to the web server 11, receives a page response to the page request, and displays the component consumption period screen 303 on a browser is similar to the operation until the information terminal 31 displays the basic information screen 302.

As illustrated in FIG. 8, the component consumption period screen 303 displayed on the information terminal 31 displays a kind of a consumable component of the object MFP and includes a usage condition display unit 3030, a usage condition description unit 3031, a date display unit 3032, a component selection button 3033, a selection display unit 3034, and a return button 3035.

The usage condition display unit 3030 is a display region in which a current period of use, a period recommended by a manufacturer, a period of use in previous component replacement of a consumable component (such as toner) selected with the component selection button 3033 are displayed. For example, in the usage condition display unit 3030, time recommended by a manufacturer is displayed as "100" in a bar graph and each of a current period of use and a period of use in previous component replacement is displayed in a bar graph indicating a relative value with respect to the time recommended by a manufacturer. In FIG. 8, an example in which a bar graph of a current period of use (value "85") is displayed in an upper stage, a bar graph of a period recommended by a manufacturer (value "100") is displayed in a middle stage, and a period of use in previous component replacement (value "110") is displayed in a lower stage in the usage condition display unit 3030 is illustrated. Also, for example, when the current period of use is shorter than the period recommended by a manufacturer, a bar graph of the current period of use is indicated in "blue." Also, when the current period of use is longer than the period recommended by a manufacturer and is shorter than the period of use in previous component replacement, a bar graph of the current period of use is indicated in "yellow." For example, when the current period of use is longer than both of the period recommended by a manufacturer and the period of use in previous component replacement, a bar graph of the current period of use is indicated in "red." In such a manner, a state of the current period of use is indicated by a color of the bar graph, whereby the user can understand a current state of the consumable component intuitively. Note that as described above, it is assumed that the usage condition display unit 3030 displays information of a "period of use" related to a consumable component of the object MFP. However, this is not the limitation and information such as a "used amount" or a "degree of usage" may be displayed.

Note that a color, which indicates a current condition, of a bar graph of the current period of use is not limited to the above-described color and may be a different color. Also, a condition to switch colors may a different condition. Also, in the example in FIG. 8, a bar graph is used as a medium to display each of the current periods of use, the period recommended by a manufacturer, and the period of use in previous component replacement. However, this is not the limitation and the periods may be displayed by a different method (for example, specific number of days may be displayed).

The usage condition description unit 3031 is a display region for describing how to see the current period of use, the period recommended by a manufacturer, and the period of use in previous component replacement which are displayed in the usage condition display unit 3030.

The date display unit 3032 is a display region displaying a date and time indicating timing of each of the current period of use, the period recommended by a manufacturer, and the period of use in previous component replacement which are displayed in the usage condition display unit 3030.

The component selection button 3033 is a button to select a consumable component the following periods of which are displayed on the usage condition display unit 3030, the periods being a current period of use, a period recommended by a manufacturer, and a period of use in previous component replacement. By pressing the component selection button 3033 of an intended consumable component, the user switches a display in the usage condition display unit 3030 into a display corresponding to the consumable component. The selection display unit 3034 is a mark display indicating which consumable component is selected.

Also, when the user presses the return button 3035 on the component consumption period screen 303, the information terminal 31 makes the display screen transition into the menu screen 301.

### <Service call history screen>

FIG. 9 is a view illustrating an example of the service call history screen. With reference to FIG. 9, a detail of the service call history screen 304 will be described.

When the user presses the service call history button 3015 on the menu screen 301, the information terminal 31 transmits, to the web server 11, a page request to request information of an error history generated in the object MFP and to request a display of the service call history screen 304. An operation in which the information terminal 31 transmits a page request to the web server 11, receives a page response to the page request, and displays the service call history screen 304 on a browser is similar to the operation until the information terminal 31 displays the basic information screen 302.

As illustrated in FIG. 9, the service call history screen 304 displayed on the information terminal 31 displays an error history of the object MFP and includes a date display unit 3040 and a return button 3041. In FIG. 9, for example, it is indicated that an error "White level detection error" identified by a service call (SC) code "42" is generated at time "21:03:33" on a date "2013/7/8."

The date display unit 3040 is a display region displaying a date and time indicating timing of a displayed error history.

Also, when the user presses the return button 3041 on the service call history screen 304, the information terminal 31 makes the display screen transition into the menu screen 301.

### Firmware screen

FIG. 10 is a view illustrating an example of the firmware screen. With reference to FIG. 10, a detail of the firmware screen 305 will be described.

When the user presses the firmware button 3016 on the menu screen 301, the information terminal 31 transmits, to the web server 11, a page request which requests information of a kind of firmware installed in each unit included in the object MFP, information of a code, a version, and a date of release notes of currently-installed firmware, and information of a code, a version, and a date of release notes of firmware to be updated and which requests a display of the firmware screen 305. An operation in which the information terminal 31 transmits a page request to the web server 11, receives a page response to the page request, and displays the firmware screen 305 on a browser is similar to the operation until the information terminal 31 displays the basic information screen 302.

As illustrated in FIG. 10, the firmware screen 305 displayed on the information terminal 31 displays a kind of firmware installed in each unit included in the object MFP and includes a current firmware display unit 3050, an update firmware display unit 3051, and a return button 3052.

The current firmware display unit 3050 is a display region to display a code, a version, and a date of release notes of firmware currently installed in each unit (firmware type). In FIG. 10, for example, it is indicated that a firmware code is "D4598764A," a version is "5.03," and a date of release notes is "2013/03/19" in a firmware type "Power Saving System."

The update firmware display unit 3051 is a display region to display, when there is firmware to be updated in each unit (firmware type), a code, a version, and a date of release notes thereof. In FIG. 10, for example, it is indicated that there is new firmware to be updated with respect to a firmware type "Finisher (S75)." Also, it is indicated that a firmware code of the new firmware is "B1122334F," a version thereof is "2.33," and a date of the release notes thereof is "2014/01/12".

Also, when the user presses the return button 3052 on the firmware screen 305, the information terminal 31 makes the display screen transition into the menu screen 301.

### <Recommended operation list screen>

FIG. 11 is a view illustrating an example of the recommended operation list screen. With reference to FIG. 11, a detail of the recommended operation list screen 306 will be described.

When there is maintenance operation recommended to the object MFP on the menu screen 301 and the user presses the blinking recommended operation button 3012, the information terminal 31 transmits, to the web server 11, a page request (second page request) which requests information (second information) of an item of the recommended maintenance operation for the object MFP and which requests a display of the recommended operation list screen 306. An operation in which the information terminal 31 transmits a page request to the web server 11, receives a page response to the page request, and displays the recommended operation list screen 306 on a browser is similar to the operation until the information terminal 31 displays the basic information screen 302. In this case, an information request to request information indicated by an analysis result which is received by the information request unit 112 from the page request interpretation unit 111 corresponds to the "second information request." Also, page information related to the recommended operation list screen 306, which corresponds to the page request received from the page request interpretation unit 111 and which is extracted by the page creation unit 114 from the page information storage unit 115 corresponds to "third page information." Also, the created page information created by the page creation unit 114 corresponds to "fourth page information."

Here, as described above, the item of the recommended maintenance operation is, for example, toner replacement operation and firmware update operation. For example, as described above, a toner to be an object of the toner replacement operation which is the recommended maintenance operation is a toner a current period of use of which is longer than both of the period recommended by a manufacturer and the period of use in previous component replacement. Also, for example, as illustrated in FIG. 10, firmware to be an object of the firmware update operation which is the recommended maintenance operation is firmware in which there is firmware to be updated.

As illustrated in FIG. 11, the recommended operation list screen 306 displayed on the information terminal 31 displays a kind of a toner to be an object of the recommended toner replacement operation and a kind of firmware to be an object of the recommended firmware update operation. Also, the recommended operation list screen 306 includes a toner selection button 3060, a firmware selection button 3061, a date display unit 3062, and a return button 3063.

As illustrated in FIG. 11, the toner selection button 3060 is arrayed for each toner to be an object of the recommended toner replacement operation. On the button, a name of the toner as a consumable component and a relative value of a current period of use of the toner with respect to the period recommended by a manufacturer are displayed. On the recommended operation list screen 306 illustrated in FIG. 11, for example, the toner selection button 3060 of "PCU C" is arranged as a toner to be an object of the recommended toner replacement operation and "110%" is displayed as the relative value. When the user presses the toner selection button 3060 corresponding to a toner which is an object of the toner replacement operation, the information terminal 31 makes the display screen transition into the toner replacement reminder screen 307 related to the toner.

As illustrated in FIG. 11, the firmware selection button 3061 is arrayed for each kind of firmware to be an object of the recommended firmware update operation. On the button, a type of the firmware to be updated and a version of the firmware to be updated are displayed. On the recommended operation list screen 306 illustrated in FIG. 11, for example, the firmware selection button 3061 of "Finisher (S75)" is arranged as firmware to be an object of the recommended firmware update operation and "v2.33" is displayed as a version of the firmware to be updated. When the user presses the firmware selection button 3061 corresponding to the firmware to be an object of the firmware update operation, the information terminal 31 makes the display screen transition into the firmware update reminder screen 308 related to the firmware.

The date display unit 3062 is a display region displaying a date and time which indicates timing of an item of the recommended maintenance operation arranged as the toner selection button 3060 and the firmware selection button 3061.

Also, when the user presses the return button 3063 on the recommended operation list screen 306, the information terminal 31 makes the display screen transition into the menu screen 301.

As described above, with the recommended operation list screen 306 displayed by the pressing of the recommended operation button 3012 on the menu screen 301 of the information terminal 31, a list of items of the recommended maintenance operation can be checked. Thus, it is not necessary to check items, on which the maintenance operation is to be performed, one by one and the items can be recognized as a list by the recommended operation list screen 306. Accordingly, it is possible to reduce time of the maintenance operation and to reduce a cost for the maintenance operation.

Note that in the above, it is assumed that the information terminal 31 requests information of items of the toner replacement operation and the firmware update operation as items of the recommended maintenance operation and displays these operation items on the recommended operation list screen 306. However, this is not the limitation. For example, replacement of a consumable material may include not only replacement of a toner but also replacement of a drum unit, a belt unit, or a fixing unit. Also, updated software may include not only firmware but also general software in an application level.

### Toner replacement reminder screen

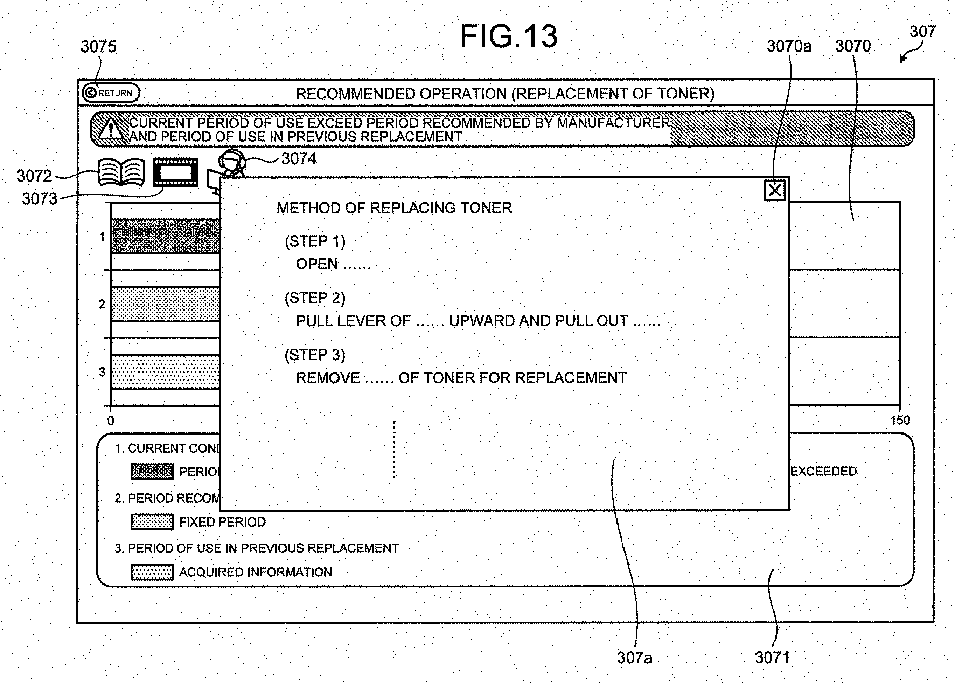

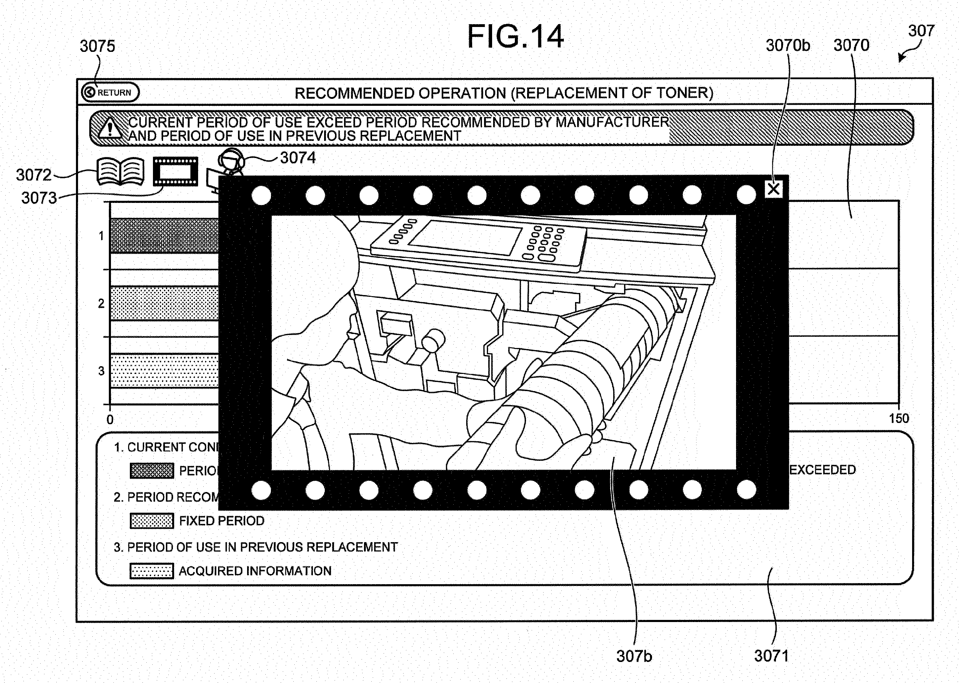

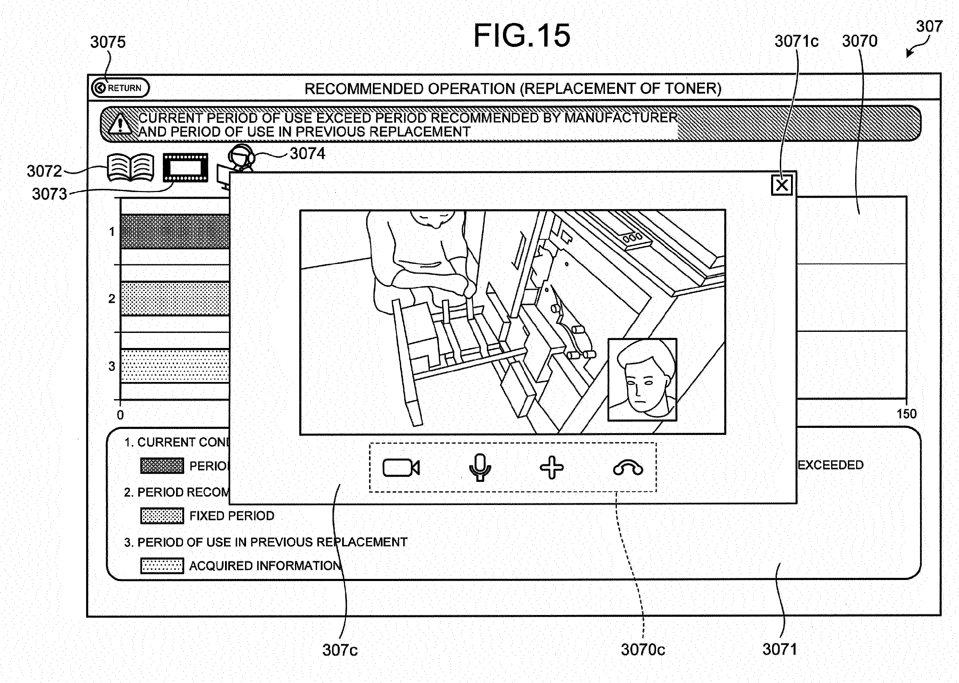

FIG. 12 is a view illustrating an example of the toner replacement reminder screen. FIG. 13 is a view illustrating an example displaying of a manual of toner replacement. FIG. 14 is a view illustrating an example of displaying of a moving image of toner replacement. FIG. 15 is a view illustrating an example of displaying a dialogue of video chat for toner replacement. With reference to FIG. 12 to FIG. 15, a detail of the toner replacement reminder screen 307 will be described.

The user presses the toner selection button 3060 corresponding to a toner, replacement operation of which is intended, in the list of toners to be objects of the recommended toner replacement operation on the recommended operation list screen 306. Then, the information terminal 31 transmits, to the web server 11, a page request (third page request) which requests information (third information) of a current period of use, a period recommended by a manufacturer, and a period of use in previous replacement of the toner selected with respect to the object MFP and which requests a display of the toner replacement reminder screen 307. The page request interpretation unit 111 receives, through the transmission/reception unit 110, the page request transmitted from the information terminal 31. Then, the page request interpretation unit 111 interprets that information of the current period of use, the period recommended by a manufacturer, and the period of use in the previous replacement of the toner selected with respect to the object MFP is requested as the information related to the MFP 20 by the page request and transmits the interpretation result to the information request unit 112. Also, the page request interpretation unit 111 transmits the received page request to the page creation unit 114. The information request unit 112 transmits an information request (third information request), which requests information indicated by the interpretation result received from the page request interpretation unit 111, to the database server 10 through the transmission/reception unit 110.

The information providing unit 103 receives, through the transmission/reception unit 100, the information request transmitted from the web server 11. Then, the information providing unit 103 extracts, from the information accumulation unit 102, information of the current period of use, the period recommended by a manufacturer, and the period of use in the previous replacement of the toner selected with respect to the object MFP indicated by the information request. The information providing unit 103 transmits an information response including the information, which is extracted from the information accumulation unit 102, to the web server 11 through the transmission/reception unit 100.

The information reception unit 113 receives an information response, which is a response to the information request transmitted from the information request unit 112, from the database server 10 through the transmission/reception unit 110 and transmits, to the page creation unit 114, information of the current period of use, the period recommended by a manufacturer, and the period of use in the previous replacement of the toner selected with respect to the object MFP included in the received information response. The page creation unit 114 extracts, from the page information storage unit 115, page information (fifth page information) related to the toner replacement reminder screen 307, which corresponds to the page request received from the page request interpretation unit 111. Then, the page creation unit 114 creates new page information based on the extracted page information and the information received from the information reception unit 113. The page creation unit 114 transmits the created page information (sixth page information) to the page response unit 116. As a response to the page request transmitted from the information terminal 31, the page response unit 116 transmits a page response including the created page information, which is received from the page creation unit 114, to the information terminal 31 through the transmission/reception unit 110.

Based on the created page information included in the received page response, the information terminal 31 displays, on a browser, the toner replacement reminder screen 307 which displays the current period of use, the period recommended by a manufacturer, and the period of use in the previous replacement of the toner selected with respect to the object MFP.

As illustrated in FIG. 12, the toner replacement reminder screen 307 displayed on the information terminal 31 includes a usage condition display unit 3070, a usage condition description unit 3071, a manual button 3072, a moving image button 3073, a video chat button 3074, and a return button 3075.

The usage condition display unit 3070 is a display region to display a current period of use, a period recommended by a manufacturer, and a period of use in previous component replacement of a toner replacement operation of which is recommended and which is selected with the toner selection button 3060 on the recommended operation list screen 306. In FIG. 12, the following example is illustrated. That is, "PCU C" is selected as a toner replacement operation of which is recommended. In the usage condition display unit 3070, a bar graph (value "111") of a current period of use is displayed in an upper stage, a bar graph (value "100") of a period recommended by a manufacturer is displayed in a middle stage, and a period of use (value "40") in previous component replacement is displayed in a lower stage.

Note that, in the example in FIG. 12, a bar graph is used as a medium to display each of the current period of use, the period recommended by a manufacturer, and the period of use in previous component replacement. However, this is not the limitation and the periods may be displayed by a different method (for example, specific number of days may be displayed).

The usage condition description unit 3071 is a display region for describing how to see the current period of use, the period recommended by a manufacturer, and the period of use in previous component replacement which are displayed in the usage condition display unit 3070.

As illustrated in FIG. 13, the manual button 3072 is a button to display the toner replacement manual dialogue 307a in which a method of replacement operation of a selected toner is indicated by a text, an image, or the like. When the user presses the manual button 3072 on the toner replacement reminder screen 307, the information terminal 31 transmits, to the web server 11, a page request (first page request) to request information (first information) such as a text or an image indicating a method of replacement operation of the selected toner and to request a display of a toner replacement manual dialogue 307a. The page request interpretation unit 111 receives the page request, which is transmitted from the information terminal 31, through the transmission/reception unit 110. Then, the page request interpretation unit 111 interprets that information such as a text or an image indicating a method of replacement operation of the selected toner is requested as the information related to the MFP 20 by the page request and transmits an interpretation result to the information request unit 112. Also, the page request interpretation unit 111 transmits the received page request to the page creation unit 114. The information request unit 112 transmits an information request (first information request), which requests information indicated by the interpretation result received from the page request interpretation unit 111, to the database server 10 through the transmission/reception unit 110.

The information providing unit 103 receives an information request, which is transmitted from the web server 11, through the transmission/reception unit 100 and extracts, from the information accumulation unit 102, information such as a text or an image indicating a method of replacement operation of the selected toner, which is indicated by the information request. The information providing unit 103 transmits an information response including the information, which is extracted from the information accumulation unit 102, to the web server 11 through the transmission/reception unit 100.

The information reception unit 113 receives an information response, which is a response to the information request transmitted from the information request unit 112, from the database server 10 through the transmission/reception unit 110 and transmits, to the page creation unit 114, information such as a text or an image indicating a method of replacement operation of the selected toner, which is included in the received information response. The page creation unit 114 extracts, from the page information storage unit 115, page information (first page information) related to the toner replacement manual dialogue 307a, which corresponds to the page request received from the page request interpretation unit 111. Then, the page creation unit 114 creates new page information based on the extracted page information and the information received from the information reception unit 113. The page creation unit 114 transmits the created page information (second page information) to the page response unit 116. As a response to the page request transmitted from the information terminal 31, the page response unit 116 transmits a page response including the created page information, which is received from the page creation unit 114, to the information terminal 31 through the transmission/reception unit 110.

Based on the created page information included in the received page response, the information terminal 31 displays, on the toner replacement reminder screen 307 displayed on a browser, the toner replacement manual dialogue 307a in which a method of replacement operation of the selected toner is indicated by a text or an image.

As described above, an object of toner replacement which is recommended maintenance operation can be checked on the toner replacement reminder screen 307 and a method of the toner replacement can be presented to the user by the toner replacement manual dialogue 307a displayed on the toner replacement reminder screen 307. Accordingly, the user can perform operation while checking a method of replacing the toner to be an object of the maintenance operation. Thus, it is possible to reduce time of maintenance operation and to reduce a cost of the maintenance operation. Also, by clarifying an operation method of maintenance operation which is used to be performed based on experience, even a field engineer without much experience can perform accurate operation and resources can be used effectively.

Also, when the user presses a close button 3070a in the toner replacement manual dialogue 307a, the toner replacement manual dialogue 307a can be closed.

As illustrated in FIG. 14, the moving image button 3073 is a button to display a toner replacement moving image dialogue 307b in which a method of replacement operation of a selected toner is indicated by a moving image. When the user presses the moving image button 3073 on the toner replacement reminder screen 307, the information terminal 31 transmits, to the web server 11, a page request (first page request) to request information (first information) of a moving image indicating a method of replacement operation of a selected toner and to request a display of the toner replacement moving image dialogue 307b. The page request interpretation unit 111 receives the page request, which is transmitted from the information terminal 31, through the transmission/reception unit 110. Then, the page request interpretation unit 111 interprets that information of a moving image indicating a method of replacement operation of the selected toner is requested as the information related to the MFP 20 by the page request and transmits an interpretation result to the information request unit 112. Also, the page request interpretation unit 111 transmits the received page request to the page creation unit 114. The information request unit 112 transmits an information request (first information request), which requests information indicated by the interpretation result received from the page request interpretation unit 111, to the database server 10 through the transmission/reception unit 110.

The information providing unit 103 receives the information request, which is transmitted from the web server 11, through the transmission/reception unit 100 and extracts, from the information accumulation unit 102, information of a moving image indicating a method of replacement operation of the selected toner, which is indicated by the information request. The information providing unit 103 transmits an information response including the information, which is extracted from the information accumulation unit 102, to the web server 11 through the transmission/reception unit 100.

The information reception unit 113 receives an information response, which is a response to the information request transmitted from the information request unit 112, from the database server 10 through the transmission/reception unit 110 and transmits, to the page creation unit 114, information of a moving image indicating a method of replacement operation of the selected toner, which is included in the received information response. The page creation unit 114 extracts, from the page information storage unit 115, page information (first page information) related to the toner replacement moving image dialogue 307b, which corresponds to the page request received from the page request interpretation unit 111. Then, the page creation unit 114 creates new page information based on the extracted page information and the information received from the information reception unit 113. The page creation unit 114 transmits the created page information (second page information) to the page response unit 116. As a response to the page request transmitted from the information terminal 31, the page response unit 116 transmits a page response including the created page information, which is received from the page creation unit 114, to the information terminal 31 through the transmission/reception unit 110.

Based on the created page information included in the received page response, the information terminal 31 displays, on the toner replacement reminder screen 307 displayed on a browser, the toner replacement moving image dialogue 307b in which a method of replacement operation of the selected toner is indicated by a moving image.

As described above, an object of toner replacement which is recommended maintenance operation can be checked on the toner replacement reminder screen 307 and a method of the toner replacement can be presented to the user by the toner replacement moving image dialogue 307b displayed on the toner replacement reminder screen 307. Accordingly, the user can understand a detail of a method of replacing a toner to be an object of the maintenance operation. Thus, it is possible to further reduce time of the maintenance operation and to further reduce a cost of the maintenance operation. Also, even a field engineer without much experience can perform operation more accurately and a resource can be used more effectively.

Also, when the user presses the close button 3070b on the toner replacement moving image dialogue 307b, the toner replacement moving image dialogue 307b can be closed.

As illustrated in FIG. 15, the video chat button 3074 is a button to display a toner replacement video chat dialogue 307c in which a method of replacement operation of a selected toner is indicated by a video chat. When the user presses the video chat button 3074 on the toner replacement reminder screen 307, the information terminal 31 transmits, to the web server 11, a page request (first page request) to request information (first information) such as a script of a video chat for indicating a method of replacement operation of the selected toner and to request a display of the toner replacement video chat dialogue 307c. The page request interpretation unit 111 receives the page request, which is transmitted from the information terminal 31, through the transmission/reception unit 110. Then, the page request interpretation unit 111 interprets that information such as a script of a video chat for indicating a method of replacement operation of the selected toner is requested as the information related to the MFP 20 by the page request and transmits an interpretation result to the information request unit 112. Also, the page request interpretation unit 111 transmits the received page request to the page creation unit 114. The information request unit 112 transmits an information request (first information request), which requests information indicated by the interpretation result received from the page request interpretation unit 111, to the database server 10 through the transmission/reception unit 110.

The information providing unit 103 receives the information request, which is transmitted from the web server 11, through the transmission/reception unit 100 and extracts, from the information accumulation unit 102, information such as a script of a video chat indicating a method of replacement operation of the selected toner, which is indicated by the information request. The information providing unit 103 transmits an information response including the information, which is extracted from the information accumulation unit 102, to the web server 11 through the transmission/reception unit 100.

The information reception unit 113 receives an information response, which is a response to the information request transmitted from the information request unit 112, from the database server 10 through the transmission/reception unit 110 and transmits, to the page creation unit 114, information such as a script of a video chat for indicating a method of replacement operation of the selected toner, which is included in the received information response. The page creation unit 114 extracts, from the page information storage unit 115, page information (first page information) related to the toner replacement video chat dialogue 307c, which corresponds to the page request received from the page request interpretation unit 111. Then, the page creation unit 114 creates new page information based on the extracted page information and the information received from the information reception unit 113. The page creation unit 114 transmits the created page information (second page information) to the page response unit 116. As a response to the page request transmitted from the information terminal 31, the page response unit 116 transmits a page response including the created page information, which is received from the page creation unit 114, to the information terminal 31 through the transmission/reception unit 110.

Based on the created page information included in the received page response, the information terminal 31 displays, on the toner replacement reminder screen 307 displayed on a browser, the toner replacement video chat dialogue 307c in which a method of replacement operation of the selected toner is indicated by a video chat. By operating a video chat operation button 3070c through the toner replacement video chat dialogue 307c, the user can have a video chat with staff, for example, in a service center and can perform toner replacement according to an instruction from the staff by a moving image and communication.

As described above, an object of toner replacement which is the recommended maintenance operation can be checked on the toner replacement reminder screen 307 and a method of the toner replacement can be presented to the user by the toner replacement video chat dialogue 307c displayed on the toner replacement reminder screen 307. Accordingly, the user can understand a detail of a method of replacing a toner to be an object of the maintenance operation. Thus, it is possible to further reduce time of the maintenance operation and to further reduce a cost of the maintenance operation. Also, even a field engineer without much experience can perform operation more accurately and a resource can be used more effectively.

Also, when the user presses the close button 3071c in the toner replacement video chat dialogue 307c, the toner replacement video chat dialogue 307c can be closed.

Also, when the user presses the return button 3075 on the toner replacement reminder screen 307, the information terminal 31 performs transition into the recommended operation list screen 306.

Note that it is assumed that a screen to remind replacement of a toner which is a consumable component is displayed on the toner replacement reminder screen 307. However, this is not the limitation. A screen to remind replacement of a drum unit, a belt unit, a fixing unit, or the like may be displayed.

### Firmware update reminder screen

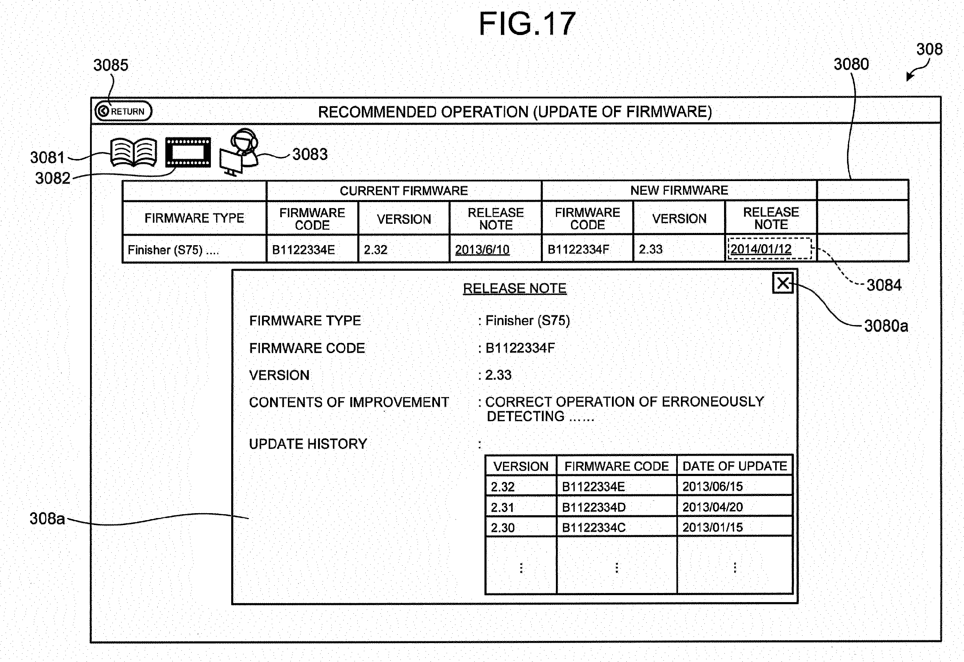

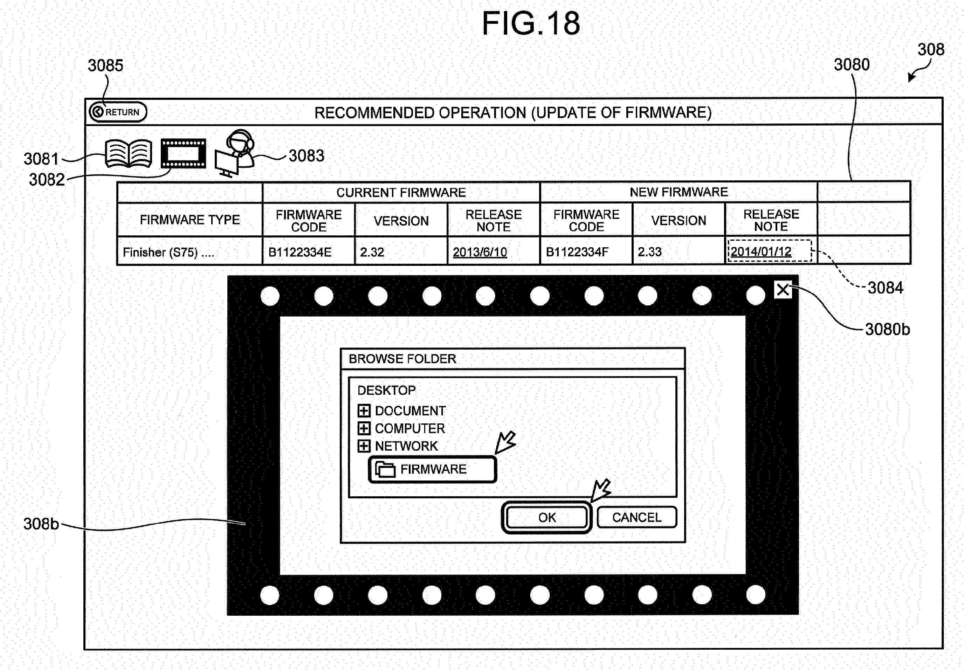

FIG. 16 is a view illustrating an example of the firmware update reminder screen. FIG. 17 is a view illustrating an example of displaying release notes of firmware. FIG. 18 is a view illustrating an example of displaying a moving image for firmware update. With reference to FIG. 16 to FIG. 18, a detail of the firmware update reminder screen 308 will be described.

The user presses, on the recommended operation list screen 306, the firmware selection button 3061 corresponding to firmware, update operation of which is intended, in a list of firmware to be an object of the recommended firmware update operation. Then, the information terminal 31 transmits, to the web server 11, a page request (third page request) which requests information (third information) of a code, a version, and a date of release notes of currently-installed firmware and a code, a version, and a date of release notes of firmware to be updated with respect to the firmware selected in the object MFP and which requests a display of the firmware update reminder screen 308. The page request interpretation unit 111 receives the page request, which is transmitted from the information terminal 31, through the transmission/reception unit 110. Then, the page request interpretation unit 111 interprets that information of a code, a version, and a date of release notes of currently-installed firmware in the firmware selected in the object MFP and information of a code, a version, and a date of release notes of firmware to be updated are requested as the information related to the MFP 20 by the page request and transmits an interpretation result to the information request unit 112. Also, the page request interpretation unit 111 transmits the received page request to the page creation unit 114. The information request unit 112 transmits an information request (third information request), which requests information indicated by the interpretation result received from the page request interpretation unit 111, to the database server 10 through the transmission/reception unit 110.

The information providing unit 103 receives the information request, which is transmitted from the web server 11, through the transmission/reception unit 100. Then, the information providing unit 103 extracts, from the information accumulation unit 102, information of a code, a version, and a date of release notes of the currently-installed firmware and information of a code, a version, and a date of release notes of the firmware to be updated in the firmware selected in the object MFP, the information being indicated by the information request. The information providing unit 103 transmits an information response including the information, which is extracted from the information accumulation unit 102, to the web server 11 through the transmission/reception unit 100.

The information reception unit 113 receives an information response, which is a response to the information request transmitted from the information request unit 112, from the database server 10 through the transmission/reception unit 110. Then, the information reception unit 113 transmits, to the page creation unit 114, the information of a code, a version, and a date of release notes of the currently-installed firmware and the information of a code, a version, and a date of release notes of the firmware to be updated in the firmware selected in the object MFP, the information being included in the received information response. The page creation unit 114 extracts, from the page information storage unit 115, page information (fifth page information) related to the firmware update reminder screen 308, which corresponds to the page request received from the page request interpretation unit 111. Then, the page creation unit 114 creates new page information based on the extracted page information and the information received from the information reception unit 113. The page creation unit 114 transmits the created page information (sixth page information) to the page response unit 116. As a response to the page request transmitted from the information terminal 31, the page response unit 116 transmits a page response including the created page information, which is received from the page creation unit 114, to the information terminal 31 through the transmission/reception unit 110.

Based on created page information included in the received page response, the information terminal 31 displays, on a browser, the firmware update reminder screen 308 which displays the information of a code, a version, and a date of release notes of the currently-installed firmware and a code, a version, and a date of release notes of the firmware to be updated in the firmware selected in the object MFP.

As illustrated in FIG. 16, the firmware update reminder screen 308 displayed on the information terminal 31 includes a update recommended firmware display unit 3080, a manual button 3081, a moving image button 3082, a video chat button 3083, a release notes button 3084, and a return button 3085.

The update recommended firmware display unit 3080 is a display region to display a code, a version, and a date of release notes of the currently-installed firmware and a code, a version, and a date of release notes of the firmware to be updated in the selected firmware. In FIG. 16, it is indicated that a firmware type "Finisher (S75)" is selected as firmware update operation of which is recommended, a current firmware code is "B1122334E," a version is "2.32," and a date of release notes is "2013/06/10." Also, it is indicated that a firmware code of the firmware to be updated is "B1122334F," a version is "2.33," and a date of release notes is "2014/01/12."

As illustrated in FIG. 18, the moving image button 3082 is a button to display a firmware update moving image dialogue 308b in which a method of update operation of selected firmware is indicated by a moving image. When the user presses the moving image button 3082 on the firmware update reminder screen 308, the information terminal 31 transmits, to the web server 11, a page request (first page request) which requests information (first information) of a moving image indicating a method of update operation of the selected firmware and which requests a display of the firmware update moving image dialogue 308b. The page request interpretation unit 111 receives the page request, which is transmitted from the information terminal 31, through the transmission/reception unit 110. Then, the page request interpretation unit 111 interprets that information of a moving image indicating a method of update operation of the selected firmware is requested as the information related to the MFP 20 by the page request and transmits an interpretation result to the information request unit 112. Also, the page request interpretation unit 111 transmits the received page request to the page creation unit 114. The information request unit 112 transmits an information request (first information request), which requests information indicated by the interpretation result received from the page request interpretation unit 111, to the database server 10 through the transmission/reception unit 110.

The information providing unit 103 receives the information request, which is transmitted from the web server 11, through the transmission/reception unit 100 and extracts, from the information accumulation unit 102, information of a moving image indicating a method of update operation of the selected firmware, which is indicated by the information request. The information providing unit 103 transmits an information response including the information, which is extracted from the information accumulation unit 102, to the web server 11 through the transmission/reception unit 100.

The information reception unit 113 receives an information response, which is a response to the information request transmitted from the information request unit 112, from the database server 10 through the transmission/reception unit 110 and transmits, to the page creation unit 114, information of a moving image indicating a method of update operation of the selected firmware, which is included in the received information response. The page creation unit 114 extracts, from the page information storage unit 115, page information (first page information) related to the firmware update moving image dialogue 308b, which corresponds to the page request received from the page request interpretation unit 111. Then, the page creation unit 114 creates new page information based on the extracted page information and the information received from the information reception unit 113. The page creation unit 114 transmits the created page information (second page information) to the page response unit 116. As a response to the page request transmitted from the information terminal 31, the page response unit 116 transmits a page response including the created page information, which is received from the page creation unit 114, to the information terminal 31 through the transmission/reception unit 110.

Based on the created page information included in the received page response, the information terminal 31 displays, on the firmware update reminder screen 308 displayed on a browser, the firmware update moving image dialogue 308b in which a method of update operation of the selected firmware is indicated by a moving image.

As described above, an object of firmware update which is recommended maintenance operation can be checked on the firmware update reminder screen 308 and a method of toner replacement can be presented to the user by the firmware update moving image dialogue 308b displayed on the firmware update reminder screen 308. Accordingly, the user can understand a detailed method of updating the firmware to be an object of the maintenance operation. Thus, it is possible to reduce time of the maintenance operation greatly and to reduce a cost of the maintenance operation greatly. Also, by clarifying an operation method of maintenance operation which is used to be performed based on experience, even a field engineer without much experience can perform accurate operation and resources can be used effectively.

Also, when the user presses a close button 3080b in the firmware update moving image dialogue 308b, the firmware update moving image dialogue 308b can be closed.

The manual button 3081 is a button to display a manual dialogue (not illustrated) in which a method of update operation of selected firmware is indicated by a text, an image, or the like. An operation in which the information terminal 31 transmits a page request (first page request) to the web server 11, receives a page response to the page request, and displays a manual dialogue on the firmware update reminder screen 308 on a browser is similar to the operation until the information terminal 31 displays the firmware update moving image dialogue 308b on the firmware update reminder screen 308.

The video chat button 3083 is a button to display a video chat dialogue (not illustrated) in which a method of update operation of a selected firmware is indicated by a video chat. An operation in which the information terminal 31 transmits a page request (first page request) to the web server 11, receives a page response to the page request, and displays a video chat dialogue on the firmware update reminder screen 308 on a browser is similar to the operation until the information terminal 31 displays the firmware update video dialogue 308b on the firmware update reminder screen 308.

In such a manner, an object of the firmware update which is recommended maintenance operation can be checked on the firmware update reminder screen 308 and a method of firmware update can be presented to the user by the manual dialogue or the video chat dialogue displayed on the firmware update reminder screen 308. Accordingly, the user can perform operation while checking a method of updating firmware to be an object of the maintenance operation. Thus, it is possible to reduce time of the maintenance operation and to reduce a cost of the maintenance operation. Also, even a field engineer without much experience can perform operation accurately and a resource can be used effectively.

As illustrated in FIG. 17, the release notes button 3084 is a button to display a release notes dialogue 308a in which release notes about update of the selected firmware is indicated. An operation in which the information terminal 31 transmits a page request to the web server 11, receives a page response to the page request, and displays the release notes dialogue 308a on the firmware update reminder screen 308 on a browser is similar to the operation until the information terminal 31 displays the firmware update video dialogue 308b on the firmware update reminder screen 308. Also, when the user presses the close button 3080a in the release notes dialogue 308a, the release notes dialogue 308a can be closed.

Also, when the user presses the return button 3085 on the firmware update reminder screen 308, the information terminal 31 performs transition into the recommended operation list screen 306.

Note that it is assumed that a reminder screen of update of the firmware which is software to be updated is displayed on the firmware update reminder screen 308. However, this is not the limitation. A reminder screen of update of general software in an application level may be displayed.

Note that in the present embodiment, operation of replacing a toner and operation of updating firmware have been specifically described as examples of the maintenance operation. However, these are not the limitation. For example, the maintenance operation may be operation of replacing a periodically-replaced component or a consumable component such as a drum unit, a belt unit, or a fixing unit.

Also, in a case where at least one of the device information acquisition unit 101 and the information providing unit 103 of the database server 10 in the present embodiment and the page request interpretation unit 111, the information request unit 112, the information reception unit 113, the page creation unit 114, and the page response unit 116 of the web server 11 is realized by execution of a program, the program is previously installed into a ROM or the like and is provided. Also, a program executed in each of the database server 10 and the web server 11 of the present embodiment may be recorded, as a file in an installable format or executable format, in a computer-readable recording medium such as a CD-ROM, a flexible disk (FD), a CD-R, or a DVD when provided. Also, a program executed in each of the database server 10 and the web server 11 of the present embodiment may be stored in a computer connected to a network such as the Internet and may be provided by being downloaded through the network. Also, a program executed in each of the database server 10 and the web server 11 of the present embodiment may be provided or distributed through the network such as the Internet. A program executed in each of the database server 10 and the web server 11 of the present embodiment has a module configuration including at least one of the device information acquisition unit 101 and the information providing unit 103 of the database server 10 and the page request interpretation unit 111, the information request unit 112, the information reception unit 113, the page creation unit 114, and the page response unit 116 of the web server 11. As actual hardware, the CPU reads the program from the ROM and executes the program, whereby each of the above-described parts is loaded into a main storage device and generated.

According to the present invention, an object of maintenance can be specified and a detailed method of the maintenance operation can be presented.

Although the invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

The present application claims priority to and incorporates by reference the entire contents of Japanese Patent Application No. 2014-188281 filed in Japan on September 16, 2014.

## Claims

1. An information processing device comprising:
a reception unit that receives, from an information terminal, a first page request including a request of first information for indicating a method of maintenance operation with respect to an object device;
an information request unit that generates a first information request to request the first information included in the first page request received in the reception unit;
an information accumulation unit that accumulates information related to the object device;
an extraction unit that extracts the first information from the information accumulation unit according to the first information request;
a creation unit that creates second page information including first page information corresponding to the first page request and the first information extracted by the extraction unit; and
a response unit that transmits the second page information, which is to display the first information on the information terminal, to the information terminal in response to the first page request.

2. The information processing device according to claim 1, wherein the first information is information of a moving image indicating a method of the maintenance operation.

3. The information processing device according to claim 1, wherein the first information is information to realize a video chat for indicating the method of the maintenance operation.

4. The information processing device according to claim 1, wherein the first information is information of a text or an image indicating the method of the maintenance operation.

5. The information processing device according to any one of claims 1 to 4, wherein
the reception unit receives, from the information terminal, a second page request including a request of second information which is information of an item of maintenance operation recommended to the object device,
the information request unit generates a second information request to request the second information included in the second page request received in the reception unit,
the extraction unit extracts the second information from the information accumulation unit according to the second information request,
the creation unit creates fourth page information including third page information corresponding to the second page request and the second information extracted by the extraction unit, and
the response unit transmits the fourth page information, which is to display the second information on the information terminal, to the information terminal in response to the second page request.

6. The information processing device according to claim 5, wherein
the reception unit receives, from the information terminal, a third page request including a request of third information which is information related to an item of the maintenance operation selected from the second information in the information terminal on which a page is displayed based on the fourth page information,
the information request unit generates a third information request to request the third information included in the third page request received in the reception unit,
the extraction unit extracts the third information from the information accumulation unit according to the third information request,
the creation unit creates sixth page information which includes fifth page information corresponding to the third page request and the third information extracted by the extraction unit and which is to allow the first page request to be transmitted, and
the response unit transmits the sixth page information, which is to display the third information on the information terminal, to the information terminal in response to the third page request.

7. The information processing device according to any one of claims 1 to 6, wherein the maintenance operation is operation of replacing a consumable component included in the object device.

8. The information processing device according to any one of claims 1 to 6, wherein the maintenance operation is operation of updating software installed in the object device.

9. The information processing device according to any one of claims 1 to 8, further comprising an acquisition unit that periodically acquires, from the object device, information related to the object device and accumulates the information in the information accumulation unit.

10. An information processing method comprising:
receiving, from an information terminal, a first page request including a request of first information for indicating a method of maintenance operation with respect to an object device;
generating a first information request to request the first information included in the first page request received at the receiving;
accumulating information related to the object device;
extracting the first information from the information accumulated at the accumulating, according to the first information request;
creating second page information including first page information corresponding to the first page request and the first information extracted at the extracting; and
transmitting the second page information, which is to display the first information on the information terminal, to the information terminal in response to the first page request.
